# EUROPEAN PATENT APPLICATION

(11) **EP 0 604 188 A2**
(43) Date of publication of application: **29.06.1994**
(21) Application number: 93310363.2
(22) Date of filing: 21.12.1993
(51) Int. Cl.: H04L 7/033

(54) **Clock recovery circuit**

(30) Priority: 22.12.1992 US 995223
(71) Applicant: HONEYWELL INC., Minneapolis Minnesota 55408 (US)
(72) Inventor: MacTaggart, Iain Ross, Eden Prairie, Minnesota 55408 (US)
(74) Representative: Fox-Male, Nicholas Vincent Humbert

(57) **Abstract**

A clock recovery circuit 10 for a data processing system 2 generates a clock signal which does note require a preamble for synchronization. The circuit has two burst oscillatores 22 and 24, and multiplexer 26 and a phase lock loop 30. The two burst oscillators respond to translations in the incoming NRZ signal and accordingly output a clock signal. The phase lock loop controls the oscillation rates of each of the burst oscillatores. The multiplexer controls which burst oscillator is used as the clock signal for a shift register which stores the incoming data.

## Description

### FIELD OF THE INVENTION

This invention relates to data processing systems, and more specifically, to a system for recovering a clock signal from a transmitted nonreturn-to-zero (NRZ) signal.

### BACKGROUND OF THE INVENTION

Digital information is commonly transferred between different data processing systems via a serial bit stream. Information is encoded in a series of high and low electrical pulses which are transmitted between systems. Within the data processing system, Within the data processing system, the bit stream is read by sampling the high and low signals at predetermined intervals. The sampling of the incoming bit stream is controlled by an oscillating clock signal.

In these types of systems, a typical clock signal is provided by a voltage controlled oscillator (VCO). Every time the VCO outputs a voltage pulse, the incoming bit stream is sampled. In order for this system to work properly the VCO must be synchronized with the incoming data stream. A well known method to synchronize the clock with the data is to provide a preamble in the incoming bit stream. The preamble is a series of test signals which the data processing system reads and uses to adjust the sampling rate. If the data stream and the clock are not properly synchronized, data will be read at the wrong time, possibly causing multiple bit errors.

A disadvantage of a system which uses a preamble is that it requires computer time to provide the alignment. This is not a problem if the data processing system only reads continuously from one source because the time used to align the clock with the bit stream is insignificant. However, if the system must read from a variety of different data sources, the time taken for alignment of the clock and the data can degrade link latency, thus significantly slowing the system. An ideal system for this scenario would be one wherein information in the bit stream aligns the clock immediately, allowing the system to begin reading data without any wasted time.

Therefore, the object of this invention is to provide a clock recovery circuit which can operate in the burst mode.

### SUMMARY

Therefore, there is provided a clock recovery circuit for a data processing system which receives data over an NRZ signal. The clock recovery circuit has at least two burst oscillators which receive the NRZ signal. A first burst oscillator outputs an oscillating signal in response to a rising edge in the NRZ signal and a flat signal in response to a falling edge. The second oscillator outputs an oscillating signal in response to a falling edge in the NRZ signal and a flat signal in response to a rising edge. Connected to both the first and second oscillators is a phase locked loop. A frequency reference and a burst oscillator combine in the phase locked loop to create an error signal which controls the rate of oscillation of the first and second oscillators.

The oscillating signals output from the first and second oscillators are transmitted to a 2:1 multiplexer. The control signal for the multiplexer is the NRZ signal, and due to the alternating nature of the first and second oscillators, the multiplexer provides a constant clock signal. This clock signal is used with a storage register to sample and store information in the bit stream.

The rate at which the bit stream is sampled is controlled by the frequency reference, while the alignment of the clock with the incoming data is provided by the first and second oscillators.

### BRIEF DESCRIPTION OF THE DRAWINGS

Figure 1 is a block diagram of the data processing system.

Figure 2 is a block diagram of the clock recovery circuit.

Figure 3 is a timing diagram for the clock recovery circuit.

### DETAILED DESCRIPTION OF THE PREFERRED EMBODIMENT

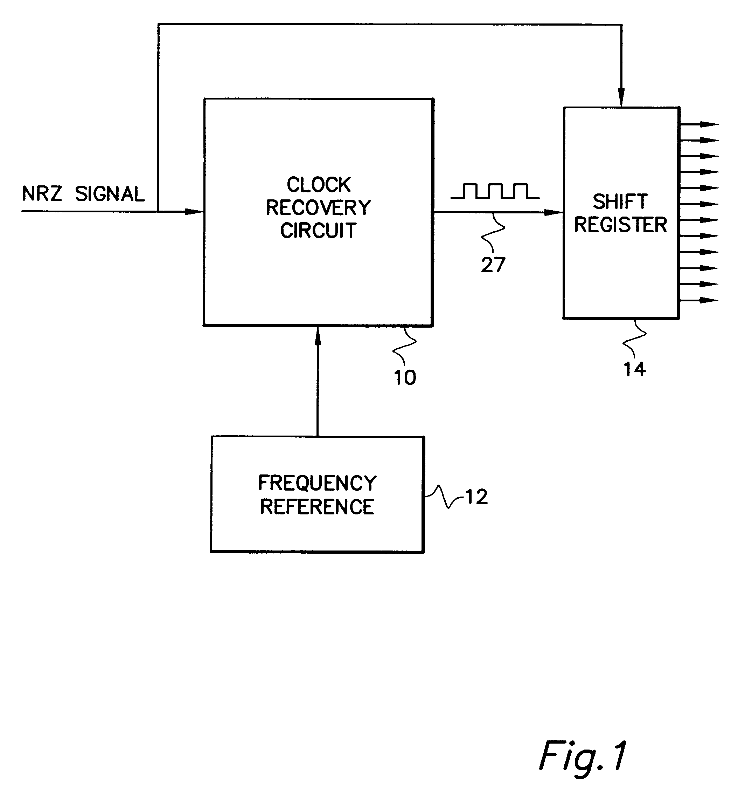

In Fig. 1 there is shown the block diagram for data processing system 2. An NRZ signal is transmitted from an external source to the clock recovery circuit 10 and shift register 14. A reference frequency 12 is input to the clock recovery circuit 10. The clock recovery circuit is connected to shift register 14. The shift register outputs data in the desired format, either in parallel or serially.

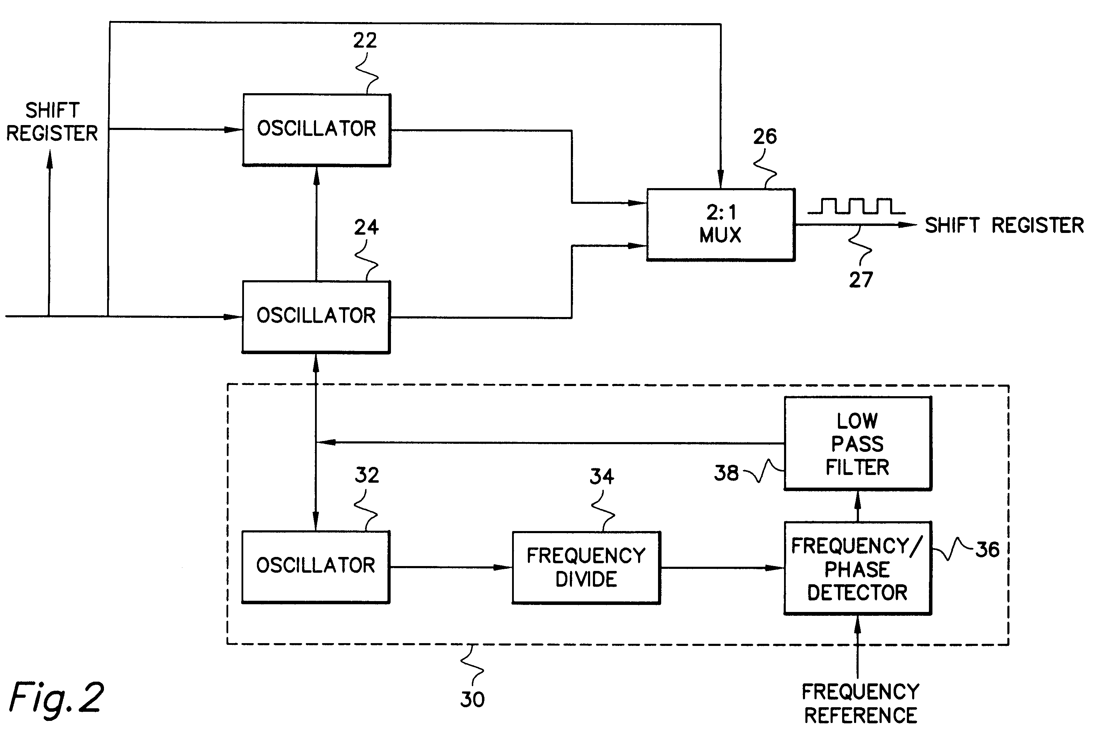

The clock recovery circuit 10 is shown in more detail in Fig. 2. The NRZ signal runs to oscillator 22, oscillator 24, and to 2:1 multiplexer 26. Multiplexer 26 is connected to shift register 14. Connected to both oscillators A and B is the phase locked loop 30. Within the phase locked loop, oscillator 32 transmits a constant oscillating signal to the frequency divider 34. The frequency divider is connected to the frequency/phase detector 36. Also connected to the frequency/phase detector is the frequency reference 12. The frequency reference 12 is an electronic oscillating signal emitted from a quartz crystal timing piece. The frequency/phase detector is connected to the low pass filter 38 which in turn is connected to oscillators 22, 24 and 32.

As is well known in the art, data is transmitted between data processing systems in bit streams. Each data processing system which receives a bit stream, samples it at regular intervals, and stores the retrieved data in some kind of register. In order to read the data off the bit stream with a minimum of errors, it is necessary that the sampling rate be synchronized with the incoming bit stream. If the system is not synchronized, the bit stream may be sampled during transitions, or at a rate that isn't fast or slow enough to match the incoming data. If these situations occur, an error will be made in reading the data.

In prior art systems, a special signal precedes the actual transmission of information in order to synchronize the incoming data with the sampling rate of the data processing system. This special signal is known as a preamble. In most cases the process of synchronizing the clock and bit stream may take around 10 milliseconds. If a data processing system reads information from just one source for long periods of time, the time taken to lock in on the incoming signal may not be significant. However, if a system must read data from a variety of sources for short periods of time, the time taken to lock onto the bit stream becomes significant. Having to perform this function every time a new data source begins transmitting reduces the efficiency of the data processing system. The present system avoids the drawbacks of the prior art by eliminating the use of a preamble and designing the clock recovery circuit to operate in the burst mode.

An NRZ signal is received by oscillators 22, 24. Both oscillators are burst oscillators which respond to the phase of the NRZ signal. In this embodiment, oscillator A will output an oscillating signal in response to the NRZ signal being high, and a flat signal in response to the NRZ signal being low. The oscillator B will output an oscillating signal in response to the NRZ signal being low, and a flat signal in response to a high signal. The rate of oscillation of both oscillators is controlled by an error signal emitted by the phase locked loop 30.

In the phase locked loop 30, the oscillator 32 constantly outputs an oscillating signal. In this embodiment, the signal is oscillating in the gigahertz range. Also in the loop, a frequency reference signal is input into the frequency/phase detector 36. The quartz crystal reference used in this embodiment usually oscillates in the megahertz range. The frequency/phase detector receives the signals from both the frequency reference 12 and oscillator 32. Because oscillator 32 oscillates at a much greater rate than the frequency reference 12, the divider 30 is put in the loop to divide the signal oscillator 32 into the range of the frequency reference. The frequency/phase detector 36 creates an error signal proportionate to the difference in oscillation rates between the oscillator C and the frequency reference. The error signal is sent through filter 38 and transmitted to oscillators 22, 24 and 32. This error signal controls the rate of oscillation of each oscillator so as to match the rate of the frequency reference, taking into account the frequency divider 34.

As seen in Fig. 2, the outputs from oscillators 22 and 24 are connected to multiplexer 26. The control signal for the multiplexer 26 is the NRZ signal itself. The multiplexer is in sync with oscillators 22 and 24 so as to output a signal which is constantly oscillating. This signal is the clock for sampling the incoming bit stream. This clock output is transmitted to the shift register 14.

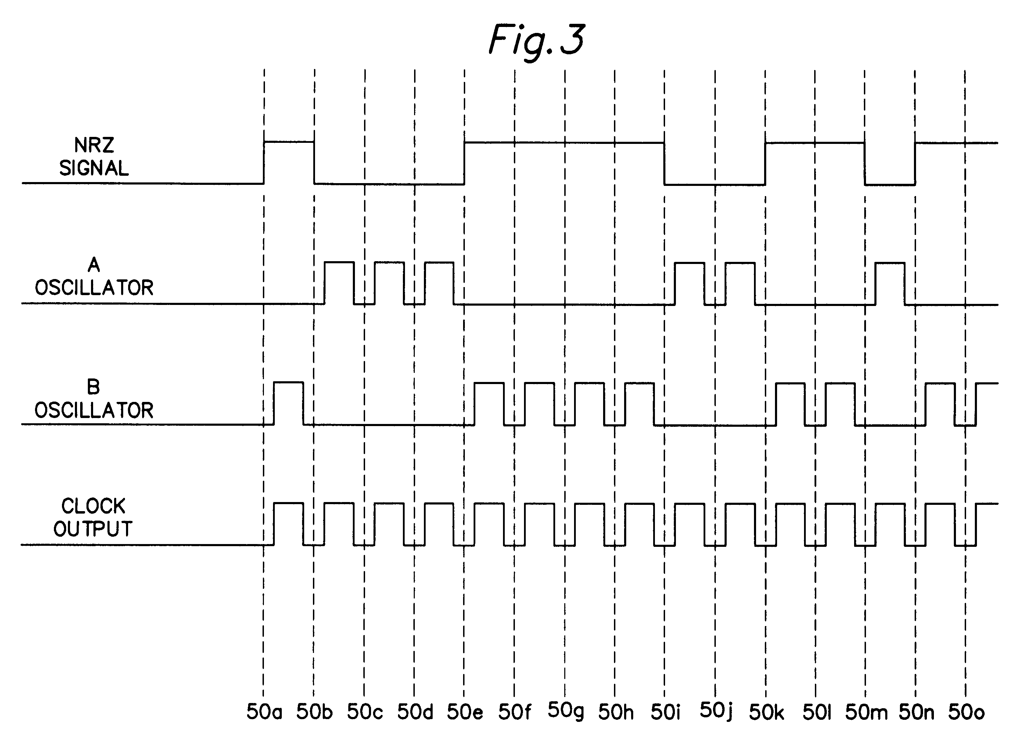

The operation of the clock recovery circuit can be better understood by study of the timing diagram in Fig. 3. This timing diagram shows the signals transmitted within the data processing system for time periods 50a-o. As is seen, the NRZ signal is a series of sustained high and low pulses. For this embodiment of the invention, the bit stream is encoded in 4B5B or some other encoding scheme in which the number of consecutive like bits in the bit stream is limited. This type of encoding is necessary for any data processing which uses an internal clock to control the sampling rate. This is due to any compression, expansion or distortion of the electronic signal which comprises the bit stream. At 50b, the NRZ signal goes from high to low. This transition causes oscillator 22 to begin to output an oscillating signal. The rate of oscillation is controlled by the phase locked loop 30. The falling edge at 50b also signals the multiplexer 26 to output the signal from oscillator 22 as the clock signal. The signal is transmitted to the shift register 14, which in turn reads and stores the data in the bit stream.

At 50e, the NRZ signal transitions upward. This transition causes oscillator 24 to begin outputting an oscillating signal while the output from oscillator 22 goes flat. As always, the rate of oscillator 24 is controlled by the error signal transmitted by the phase locked loop 30. At the upward transition, the multiplexer switches and begins transmitting the signal from oscillator 24. As the NRZ signal continues to transition between 50e-o a constant clock signal is output from the multiplexer to the shift register. Using the clock signal transmitted from the multiplexer 26, the shift register regularly samples and stores the information transmitted through the NRZ signal.

The advantage of the above-described invention is that a data processing system can operate in the burst mode. This means the clock recovery circuit can receive information from a variety of sources without spending computer time to align the NRZ signal with an internally generated clock signal. Also, because the data stream is limited in the number of consecutive like bits, the clock is realigned every time a transition occurs. This guarantees synchronization of the clock and the incoming data.

The foregoing is a description of a novel and nonobvious clock recovery circuit. The applicant does not intend to limit the invention through the foregoing description, but instead define the invention through the claims appended hereto.

## Claims

1. A clock recovery circuit for extracting a clock signal from an NRZ signal, the circuit characterised by:
at least two oscillating means which receive the NRZ signal and alternately output an oscillating signal responsive to the phase changes of the NRZ signal;
a reference means which transmits an error signal to said oscillating means, wherein the error signal controls the rate of oscillation of each of the oscillating signals output by each of said oscillating means; and
a multiplexing means connected to said oscillating means which multiplexes the oscillating signals alternately output by the oscillating means to provide a continuous clock signal.

2. A clock recovery circuit according to Claim 1 characterised in that said oscillating means comprises a burst oscillator.

3. A clock recovery circuit according to Claim 1 or 2 characterised in that the clock recovery circuit contains two of the burst oscillators.

4. A clock recovery circuit according to any preceding Claim characterised in that the multiplexing means is a 2:1 multiplexer.

5. A clock recovery circuit according to any preceding Claim characterised in that the reference means is a phased locked loop connected to a frequency reference.

6. A clock recovery circuit according to Claim 5 characterised in that the frequency reference is an electronic signal emitted from a quartz crystal timing piece.

7. A method of clock recovery from an NRZ signal, the method characterised by the steps of:
receiving an NRZ signal;
generating at least two signals which oscillate alternately in response to phase changes of the NRZ signal;
generating an error signal using a frequency reference;
controlling the rate of oscillation of the alternately oscillating signals with the error signal; and
multiplexing the alternately oscillating signals to provide a constant clock signal output.

8. A method according to Claim 7 characterised in that the error signal is generated from a phase locked loop.

9. A method according to Claim 7 or 8 characterised in that two of the alternately oscillating signals are generated.

10. A method according to any of Claims 7 to 9 characterised in that a first of the alternately oscillating signals oscillates in response to a falling edge in the NRZ signal and a second of the alternately oscillating signals oscillates in response to a rising edge in the NRZ signal.
